(19) Europäisches Patentamt
European Patent Office
Office européen des brevets

(11) Veröffentlichungsnummer: **0 092 740**
**B1**

# (12) EUROPÄISCHE PATENTSCHRIFT

(45) Veröffentlichungstag der Patentschrift: **08.04.87**

(51) Int. Cl.⁴: **C 08 J 9/10** // C07C107/02

(21) Anmeldenummer: **83103589.4**

(22) Anmeldetag: **14.04.83**

## (54) Neue Treibmittelkombination auf Basis von Azodicarbonamid, deren Herstellung und Verwendung zur Verschaumung von Kunststoffen.

(30) Priorität: **28.04.82 DE 3215835**

(43) Veröffentlichungstag der Anmeldung: **02.11.83 Patentblatt 83/44**

(45) Bekanntmachung des Hinweises auf die Patenterteilung: **08.04.87 Patentblatt 87/15**

(84) Benannte Vertragsstaaten: **AT BE CH DE FR GB IT LI NL SE**

(56) Entgegenhaltungen:
**EP-A-0 037 188**
**FR-A-2 285 424**
**FR-A-2 384 815**

(73) Patentinhaber: **BAYER AG, Konzernverwaltung RP Patentabteilung, D-5090 Leverkusen 1 Bayerwerk (DE)**

(72) Erfinder: **Hurnik, Helmut, Bonner Strasse 5, D-5090 Leverkusen 3 (DE)**
Erfinder: **Finzenhagen, Manfred, Dr., Roggendorfstrasse 59, D-5000 Koeln 80 (DE)**
Erfinder: **Jeblick, Werner, Dr., Walter- Flex-Strasse 30, D-5090 Leverkusen 1 (DE)**

**EP 0 092 740 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Gegenstand der Erfindung sind neue Treibmittelkombinationen auf der Basis von Azodicarbonamid unter Zusatz von

1) Hilfsmitteln, ausgewählt aus der Gruppe Siliconöle, Entschäumer, Paraffinöl, Fettsäuren und deren Ammonium-, Alkali-, Erdalkalisalze, Dispergiermittel, Emulgatoren, Waschrohstoffe, Waschhilfsmittel und Fluortenside, sowie von

2) Metallverbindungen des Bors, Molybdäns, Wolframs, Chroms, Nickels, Mangans, Zinns und Titans,

deren Herstellung sowie deren Verwendung zur Herstellung von zelligen und porösen Artikeln wie Schaumstoffen aus thermoplastischen Polymeren.

Bekanntlich kann man Verschäumte Produkte aus organischen polymeren Materialien durch Zersetzung eines in das Polymer eingearbeiteten oder auf das Kunststoffgranulat aufgetrommelten Treibmittels herstellen. Diese Treibmittel zersetzen sich kontrolliert oberhalb einer bestimmten Temperatur unter Abspaltung eines Treibgases und Bildung eines Rückstandes, welche im Schaum verbleiben. In der Literatur wurden Substanzen der verschiedensten Verbindungsklassen für diesen Zweck beschrieben, beispielsweise Azoverbindungen, Hydrazide, Semicarbazide, Triazole, Tetrazole, N-Nitrosoverbindungen, Benzoxazine u.a. (Kunststoffe 66 (1976) 10.S.698-701).

Amidderivate der Azodicarbonsäure erfüllen im allgemeinen diese Bedingungen. Insbesondere Azodicarbonamid (ADC) eignet sich aufgrund seiner ausgezeichneten Stabilität, seiner hohen Zersetzungstemperatur, seiner günstigen Zersetzungscharakteristik und aufgrund des relativ großen Volumens der pro Gewichtseinheit abgespaltenen Gase. Zudem bestehen die abgespaltenen Gase zum größten Teil aus Stickstoff und die Zersetzungsrückstände sind weitgehend farb- und geruchslos.

Je nach dem zu verschäumenden Polymeren können dem Azodicarbonamid Zusätze beigemischt werden, welche beispielsweise die Zersetzungstemperatur senken oder die Porenstruktur und/oder die Farbe des entstehenden Schaumes günstig beeinflussen können.

Beispielsweise können als Zusätze verschiedene Zinksalze allein oder in Mischung mit anderen Schwermetallen wie z.B. Blei-, Zinn-, Cadmiumsalzen usw. und besonders Chromverbindungen wie Chromaten oder Chromsalzen als sehr wirksam zur Herstellung von z.B. vernetzten Polyethylenschäumen, Schaumgummi oder Polyvinylchloridschäumen verwendet werden (z.B. DE-AS 19 36 098, DE-AS 26 53 748, EP-A 00 27 688).

Weiterhin ist bekannt, daß beispielsweise durch Zusatz von Magnesiumoxid die Verschäumung günstig beeinflußt werden kann (DE-AS 28 52 287, 23 51 515). Auch ist beispielsweise der Zusatz von Zinkverbindungen in Kombination mit Al-, Sn-, B- und Si-Verbindungen zum Treibmittel beschrieben worden (JP-A 49-70931 (74-70931)).

Es wurde nun gefunden, daß man besonders günstige technologische Effekte erzielt, wenn man dem Azodicarbonamid

1) ein oder mehrere Hilfsmittel und

2) Verbindungen von Bor, Molybdän, Wolfram, Zink, Chrom, Nickel, Mangan und/oder Titan einzeln oder in Mischungen zusetzt.

Als Hilfsmittel kommen Siliconöle, Entschäumer, Paraffinöl, Fettsäuren, Dispergiermittel, Emulgatoren, Seifen, Waschrohstoffe, Waschhilfsmittel, ionische und nichtionische Tenside wie Fluortenside zum Einsatz.

Beispielsweise seien genannt:

Verschiedene viskose Siliconöle, Siliconentschäumer, Tributylphosphat, Kondensationsprodukte von Ölen mit Propylenoxid und Ethylenoxid, Heizbadöl, Wachse, Stearinsäure, Palmitinsäure, Caprinsäure, Laurinsäure, Ölsäure und deren Salze, z.B. Alkalisalze wie Natrium- und Kaliumsalze, Ammoniumsalze, Erdalkalisalze wie Calcium-, Magnesium- und Bariumsalze, entsprechende Salze von Alkylsulfonsäuren, Alkylphenolpolyglykolether, quatäre Ammoniumsalze wie z.B. Benzyldodecyldimethylammoniumchlorid, substituierte Naphthalinsulfonate, substituierte Polyglykolether, Alkali-, Erdalkali-, Ammoniumsalze von Perfluoralkansulfonsäuren und Perfluoralkancarbonsäuren.

Vorzugsweise steht in Formel (I)

n für die Zahl 8 und

m für Tetraethylammonium oder Kalium.

Als Alkali seien Natrium und Kalium, als Erdalkali Magnesium und Calcium genannt.

Vorzugsweise steht in der Formel (III)

n für eine ganze Zahl von 13 bis 21 und

M für Wasserstoff oder Natrium.

Die Verwendung der Hilfsmittel 1) verbessert die Riesel- und Fließfähigkeit des Azodicarbonamids (ADC). Zudem wird die Einarbeitbarkeit und die Verteilung des Treibmittels in Polymere verbessert. Zusätzlich kann die Bildung eines sehr feinen und gleichmäßigen Porenbildes im fertigen Schaum erreicht werden.

Bevorzugt werden 0,001-1,0 Gew.-% des Hilfsmittels 1) angewandt, ganz besonders bevorzugt 0,005-0,5 Gew.-%.

Die mittlere Korngröße des verwendeten ADC kann bei Einsatz erfindungsgemäßer Zusätze im Bereich von 5-55 µm variieren.

Als Metallverbindungen 2) seien beispielsweise genannt:

Borsäure, Natriumborate, Calciumborat, Bortrioxid, Perborate, wie z.B. Natriumperborat, Zinkperborat, Zinkborat, Molybdänoxid, Natriummolybdat, Ammoniummolybdat, Kaliummolybdat, Wolframoxid,

Wolframsäure, Natriumwolframat, Calciumwolframat, Ammoniumwolframat, Zinkoxid, Zinksulfat, Zinkchlorid, Zinknitrat, Zinkbromid, Nickelsulfat, Nickeloxid, Nickelchlorid, Nickelnitrat, Manganoxide, Manganchloride, Mangansulfate, Mangannitrate, Natrium-, Kalium-, Ammonium-manganate, Natrium-, Kalium-, Ammoniumpermanganat, Zinnchlorid, Zinnoxid, Zinndioxid, Natrium-, Kaliumstannat, Titandioxid, Natriumtitanat, Calciumtitanat, Titansulfat, Titanoxidsulfat, Titanperoxidsulfat, Titanchloride.

Es werden bevorzugt 0,01-1 Gew.-%, besonders bevorzugt 0,2 bis 0,6 Gew.-%, Metallverbindung 2) zugegeben.

Die erfindungsgemäße Treibmittelkombination, bestehend aus Azodicarbenamid (ADC), Hilfsmittel 1) und Metallverbindung 2) kann beispielsweise bei der Verschäumung von Polymeren wie thermoplastischen Polymeren Verwendung finden. Vorzugsweise wird sie bei der Verschäumung thermoplastischer Polymerer verwendet die im Temperaturbereich von 140-350°C weiterverarbeitet werden, wobei die Verarbeitungstemperatur vom jeweils eingesetzten Thermoplasten abhängt.

Als Thermoplasten seien beispielsweise genannt: Polyvinylchlorid, Polyethylen, Polypropylen, Copolymerisate aus Vinylchlorid (VC)/Vinylacetat (VAC), VC/Ethylen-Vinylacetat (EVAC), Ethylen (E)/VC, Propylen/VC, E/VAC, Ethylen, Propylen, Polystyrole, Polyamide, Polysulfone, Polyethylen-Polypropylen(PETP), Polybutylen-terephthalat (PBT), Polyphenylenoxid (PPO), Polyacrylate, Kautschuke, Kunststoffe auf Basis von Celluloseestern, Acrylnitril-Butadien-Styrol-Polymere (ABS), Mischungen aus Polysulfon und Styrol-Acrylnitril- oder ABS-Polymeren, Mischungen aus PVC und ABS-Polymeren bzw, Acrylnitril-Polymeren, polymere Mischungen und Gemische der genannten Polymeren.

Die erfindungsgemäße Treibmittelkombination wird vorzugsweise bei der Herstellung von Polyolefinschäumen, wobei Polyethylenschäume besonders bevorzugt sind, eingesetzt.

Die erfindungsgemäße Treibmittelkombination wird dem zu verarbeitendem Polymeren in üblichen Mengen zugesetzt. Vorzugsweise enthält das zu verarbeitende Polymer 0,1 bis 35 Gew.-%, besonders bevorzugt 10 bis 20 Gew.-% erfindungsgemäße Treibmittelkombination.

Die damit hergestellten Polmerschäume sind im allgemeinen farb- und geruchlos, zeigen ein feines, gleichmäßiges Porenbild bei niedrigem Raumgewicht und haben eine glatte und farblose Oberfläche. Ein weiterer Vorteil der erfindungsgemäßen Treibmittelkombination ist darin zu sehen, daß die Verschäumung beschleunigt abläuft. Besonders bei hohen Produktionsgeschwindigkeiten wird dieser Fortschritt sichtbar, da hier in kürzerer Zeit das gewünschte Raumgewicht des jeweiligen Schaumes erreicht wird. Durch die Verwendung der erfindungsgemäßen Treibmittelkombination wird beispielsweise die Wirtschaftlichkeit der Schaumherstellung verbessert und eine bessere Raum-Zeit-Ausbeute erzielt.

Die zu verschäumenden Kunststoffe können nach Bedarf bespielsweise mit Additiven wie Füllstoffen, Pigmenten, Flammschutzmitteln, Antistatika, Weichmachern, Thermostabilisatoren, Peroxiden, Alterungsschutzmitteln, Vernetzungs- und Vulkanisiermitteln versetzt werden.

Die Herstellung der erfindungsgemäßen Treibmittelkombination kann in jeder Phase der Herstellung des Azodicarbonamids, z.B. vor der Oxidation des Hydrazodicarbonamids zum Azodicarbonamid, mit einem der üblichen Oxidationsmittel wie Chlor, Brom, Jod, Wasserstoffperoxid, Natriumchlorat etc., während der Oxidation und nach der Oxidation erfolgen. Es ist ebenfalls möglich, die Stoffe bei der Isolierung durch ein gängiges Filteraggregat, wie z. B. Drucknutsche, Drehfilter, Kastennutsche, Filterpresse etc., beim Waschen des Feststoffes und nach dem Waschen zuzusetzen. Die Beaufschlagung kann auch vor dem Trocknen in einem der üblichen Förder- oder Mischaggregate, während des Trockenvorganges und nach dem Trocknen in einem allgemein üblichen Misch- oder Mahlaggregat erfolgen. Die genannten Komponenten können einzeln oder in einer Lösung vereinigt zugesetzt werden. Wenn sie einzeln zugesetzt werden, ist es möglich, sie als Feststoff, Paste oder Flüssigkeit zum Azodicarbonamid zu geben. Das kann in feinverteilter Form, wie z. B. als Nebel, Rauch, Tröpfchen, erfolgen oder als kompakte Masse. Durch geeignete Maßnahmen kann gewährleistet werden, daß das Material gleichmäßig auf der Oberfläche des Azodicarbonamids verteilt ist.

**Beispiel 1**

In einer Rührapaaratur werden vorgelegt
1.200 ml Wasser,
300 g Hydrazodicarbonamid (HDC) und
1,5 g Silikonentschäumer.
Die Suspension wird mit Chlor oxidiert.

Nach 3 Stunden ist die Oxidation des Hydrazodicarbonamids bei einem Verbrauch von 194 g Chlor beendet. Der gelbe Feststoff wird auf der Nutsche abfiltriert und im Vakuumtrockenschrank getrocknet.

Ausbeute: 284 g ≙ 96,3 %, bezogen auf Hydrazodicarbonamid (HDC)

**Beispiel 2**

Die Oxidation wird wie in Beispiel 1 durchgeführt. Vorgelegt wird statt des Silikonentschäumers 0,5 g Fluortensid der Formel
($C_8F_{17}SO_3^{\ominus}$ $^{\oplus}N\ Et_4$)
Ausbeute: 282 g (95,6 %, bezogen auf HDC)
Ø-Korn ADC (μ): 43

**Beispiel 3**

50 g ADC werden mit einer Lösung von 0,05 g Fluortensid aus Beispiel 2 in 100 ml Methanol versetzt. Das Lösungsmittel wird anschließend abdestilliert und das ADC quantitativ zurückgewonnen.
Ø-Korn ADC (μ): 14,5

**Beispiel 4**

100 g ADC werden mit einer Lösung von 0,1 g Silikonentschäumer und 0,5 g Borsäure in 100 ml Wasser vermischt. Das Lösungsmittel wird eingedampft.
Ausbeute: 100 g (quantitativ)
Ø-Korn ADC (μ): 15,5

**Beispiel 5**

In 100 ml Methanol, in dem 0,5 g Natriummolybdat in 2 ml Wasser und 0,01 g Fluortensid aus Beispiel 2 in wenig Wasser gelöst gegeben werden, werden langsam 100 g Azodicarbonamid (trocken) unter Rühren eingetragen. Nach gleichmäßiger Durchmischung wird der Feststoff vom Lösungsmittel befreit.
Ausbeute: quantitativ
Ø-Korn ADC (μ): 24

**Beispiel 6**

Zu 250 ml wäßrige Suspension in der 50 g ADC enthalten sind, werden nacheinander 0,05 g Natriummolybdat in 50 ml Wasser und 0,05 g Natriumstearat in 50 ml Wasser gegeben. Die Suspension wird 10 Minuten nachgerührt. Danach wird der Feststoff abfiltriert und getrocknet.
Ausbeute: quantitativ
Ø-Korn ADC (μ): 24

**Beispiel 7**

Zu 500 ml Azodicarbonamid-Suspension in 15 %iger Salzsäure (enthält ca. 100 g Azodicarbonamid), die auf 40°C erwärmt sind, werden 0,1 g Titanylsulfat und 0,1 g Fluortensid aus Beispiel 2, jeweils in 100 ml Wasser gelöst, tropfenweise zugegeben. Die Suspension wird anschließend 10 Minuten nachgerührt. Das Produkt wird abfiltriert, mit Wasser neutral gewaschen, auf der Nutsche weitgehend vom Wasser befreit und im Vakuumtrockenschrank getrocknet.
Ausbeute: quantitativ
Kornspektrum ADC (μ): 24

**Beispiel 8**

Analog Beispiel 7 werden mit 0,5 g Natriumwolframat und 0,01 g Fluortensid aus Beispiel 2 verfahren (statt Titanylsulfat).
Ausbeute: quantitativ
Ø-Korn ADC (μ): 24

**Beispiel 9**

Zu 50 g ADC in Aceton werden 0,185 g Zinkoxid, suspendiert in Wasser, 0,065 g Borsäure und 0,005 g Fluortensid der Formel $C_8F_{17}SO_3K$, gelöst in Wasser, gegeben. Das Lösungsmittel wird destillativ entfernt der Feststoff anschließend getrocknet.
Ausbeute an ADC: quantitativ
∅-Korn ADC (μ): 24

**Beispiel 10**

In einem Rührgefäß wird eine Suspension von 50 g ADC, 0,5 g Natriummolybdat, 0,5 g Borsäure, 0,5 g Titanylsulfat und 0,05 g Fluortensid aus Beispiel 9 in Wasser/ Aceton gerührt. Das Lösungsmittel wird anschließend destillativ entfernt.
Ausbeute (ADC): quantitativ
∅-Korn ADC (μ): 24

**Beispiel 11**

Zu 250 ml einer ADC-Suspension mit 50 g ADC in 15 %iger Salzsäure werden 0,1 g Zinkoxid, 0,05 g Borsäure und 0,005 g Fluortensid aus Beispiel 9 gegeben. Die Suspension wird 10 Minuten nachgerührt, das ADC abfiltriert, neutral gewaschen und getrocknet.
Ausbeute (ADC): quantitativ
∅-Korn ADC (μ): 24
Anteil Zink (%): 0,0001

**Beispiel 12**

In eine ADC-Suspension mit 15 %iger Salzsäure läuft eine wäßrige Lösung von Natriumstearat, so daß die Stearinsäure sich in einer Menge von 0,1-0,2 % auf das ADC aufschlägt. Ein derart behandeltes Produkt wird nach der Isolierung durch ein Filteraggregat in einen kontinuierlich arbeitenden Trockner gegeben, in den, abhängig von der Menge des ADC, gleichmäßig eine Suspension von 500 g Zinkoxid, 100 g Natriummolybdat, 170 g Borsäure, 10 g Fluortensid aus Beispiel 2 in 10 l Wasser gegeben wird. Das Produkt enthält nach dem Trocknen folgende Mengen an Metallen:
Molybdän (%): 0,034
Zink (%): 0,18
Bor (%): 0,014

**Patentansprüche**

1. Treibmittelkombination auf der Basis von Azodicarbonamid (ADC),
dadurch gekennzeichnet, daß das Azodicarbonamid mit
1) 0.0001-2 Gew.-%, bezogen auf Azodicarbonanid, eines Hilfsmittels, ausgewählt aus der Gruppe a) Siliconöle
b) Entschäumer,
c) Paraffinöl,
d) Fettsäuren, die 14 bis 22 Kohlenstoffatomen enthalten, und deren Ammonium-, Alkali- und Erdalkalisalze,
e) Dispergiermittel,
f) Emulgatoren,
g) Waschrohstoffe,
h) Waschhilfsmittel und
i) Fluortenside der Formel
$C_nF_{n+1}X^{\ominus}M^{\oplus}$ (I),
in welcher
n für eine ganze Zahl von 1 bis 10,
X für eine $-SO_3$ oder -COO-Gruppe und
M für ein Alkali-, Erdalkalimetallion oder Ammoniumion der Formel (II) steht,

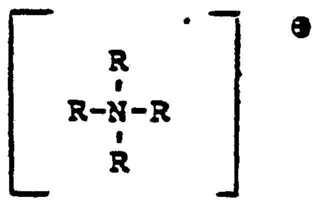

(II),

in welcher
R für einen Alkylrest mit 1 bis 10 C-Atomen steht, wobei das Fluortensid (I) gegebenenfalls mit einer Fettsäure der Formel (III)
$C_nH_{2n+1}COOM$ bzw. $C_nH_{2n-1}COOM$ (III),
kombiniert ist, worin
n für eine ganze Zahl von 7 bis 25 und
M für Wasserstoff, Natrium, Kalium, Ammonium, 1/2 Magnesium, 1/2 Calcium oder 1/2 Barium steht,
und mit
2) 0.00001-2 Gew.-%, bezogen auf Azodicarbonamid, einer oder mehrerer Verbindungen des Bors, Molybdäns, Wolframs, Chroms, Nickels, Mangans, Zinns und/oder Titans versetzt ist.

2. Verfahren zur Herstellung der Treibmittelkombination nach Anspruch 1, dadurch gekennzeichnet, daß die Herstellung der Treibmittelkombination in jeder Phase der Herstellung des Azodicarbonamids erfolgen kann.

3. Verwendung von Treibmittelkombinationen nach Anspruch 1 zur Herstellung von Kunststoffschäumen.

**Claims**

1. Blowing agent combination based on azodicarbonamide (ADC),
characterised in that
1) 0.0001-2% by weight, based on azodicarbonamide, of an auxiliary selected from the group comprising
a) silicone oils,
b) defoaming agents,
c) paraffin oil,
d) fatty acids containing 14 to 22 carbon atoms, and their ammonium, alkali metal and alkaline earth metal salts,
e) dispersing agents,
f) emulsifiers,
g) detergent base materials,
h) washing aids and
i) fluorine surfactants of the formula I
$C_nF_{n+1}X^{\ominus}M^{\oplus}$ (I)
in which
n represents an integer from 1 to 10,
X represents a $-SO_3$ or -COO group and
M repesents an alkali metal ion, an alkaline earth metal ion or an ammonium ion of the formula (II),

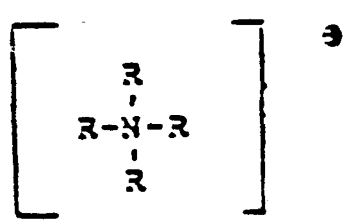

(II),

in which
R represents an alkyl radical with 1 to 10 C atoms, the fluorine surfactant (I) optionally being combined with a fatty acid of the formula (III)
$C_nH_{2n+1}COOM$ or $C_nH_{2n-1}COOM$ (III)

wherein
n represents an integer from 7 to 25 and
M represents hydrogen, sodium, potassium, ammonium, 1/2 magnesium, 1/2 calcium or 1/2 barium, and
2) 0.00001-2% by weight, based on azodicarbonamide, of one or more compounds of boron, molybdenum, tungsten, chromium, nickel, manganese, tin and/or titanium, are added to the azodicarbonamide.

2. Process for the production of the blowing agent combination according to Claim 1, characterised in that the production of the blowing agent combination can be carried out in any phase of the production of the azodicarbonamide.

3. Use of blowing agent combinations according to Claim 1 for the production of plastic foams.

**Revendications**

1. Combinaison d'agent moussant à base d'azodicarbonamide (ADC), charactérisée en ce que, à l'azodicarbonamide, on ajoute :
1) 0,0001-2% en poids (calculé sur l'azodicarbonamide) d'un agent auxiliaire choisi parmi le groupe comprenant :
a) des huiles de silicone,
b) des agents antimousses,
c) l'huile paraffinique,
d) des acides gras contenant 14 à 22 atomes de carbone, ainsi que leurs sels d'ammonium, de métaux alcalins et de métaux alcalino-terreux,
e) des agents dispersants,
f) des émulsionnants,
g) des substances brutes de lavage,
h) des agents auxiliaires de lavage, et
i) des agents tensio-actifs fluorés de formule I
$C_nF_{n+1}X^{\ominus}M^{\oplus}$ (I)
dans laquelle
n représente un nombre entier de 1 à 10,
X représente un groupe $-SO_3$ ou -COO, et
M représente un ion d'un métal alcalin, d'un métal alcalino-terreux ou d'ammonium de formule (II) :

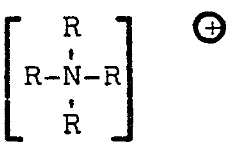

(II)

dans laquelle
R représente un radical alkyle contenant 1 à 10 atomes de carbone, l'agent tensio-actif fluoré (1) étant éventuellement combiné avec un acide gras de formule (III) :
$C_nH_{2n+1}COOM$ ou $C_nH_{2n-1}COOM$ (III),
où
n représente un nombre entier de 7 à 25 et
M représente l'hydrogène, le sodium, le potassium, l'ammonium, 1/2 magnésium, 1/2 calcium ou 1/2 baryum, ainsi que
2) 0,00001-2% en poids, calculé sur l'azodicarbonamide, d'un ou de plusieurs composés du bore, du molybdène, du tungstène, du chrome, du nickel, du manganèse, de l'étain et/ou du titane.

2. Procédé de préparation de la combinaison d'agent moussant selon la revendication 1, caractérisé en ce que la préparation de la combinaison d'agent moussant peut avoir lieu au cours de chaque phase de la préparation de l'azodicarbonamide.

3. Utilisation de combinaisons d'agents moussants selon la revendication 1 pour la fabrication de mousses de matières synthétiques.